# EUROPÄISCHE PATENTSCHRIFT

(11) **EP 0 855 527 B1**
(45) Veröffentlichungstag und Bekanntmachung des Hinweises auf die Patenterteilung: **14.03.2007**
(21) Anmeldenummer: 98100042.5
(22) Anmeldetag: 03.01.1998
(51) Int. Cl.: F16C 1/12

(54) **Anlenking von mechanischen Betätigungszügen**
Cable attachment of a control cable actuating device
Ancrage du câble d'une commande mécanique flexible

(30) Priorität: 23.01.1997 DE 19702232; 12.08.1997 DE 19734864
(43) Veröffentlichungstag der Anmeldung: 29.07.1998
(73) Patentinhaber: Küster Holding GmbH, 35630 Ehringshausen (DE)
(72) Erfinder: Gutierrez, Carmelo, 35630 Ehringshausen-Katzenfurt (DE); Moritz, Reiner, 35630 Ehringhausen-Kölschhausen (DE)
(74) Vertreter: Müller, Eckhard

(56) Entgegenhaltungen:
- GB-A- 1 032 544
- US-A- 4 069 721
- US-A- 5 142 935

## Beschreibung

Die Erfindung bezieht sich auf eine Anlenkung von mechanischen Betätigungszügen, insbesondere von Bremsseilen mit einem Anschlußelement, wie bspw. einem Kugelnippel o. dgl., an einem Nehmer- oder Geberelement.

Bei Bremsseilzügen als einer Ausführungsform von mechanischen Betätigungszügen besteht ein Problem in der Montage des Seilzuges sowohl auf der Geber- als auch auf der Nehmerseite. Die Montage erfordert in der Regel einen erheblichen Aufwand, der am Band des Kraftfahrzeugherstellers geleistet werden muß. Derartige mechanische Betätigungszüge sind bspw. aus Mechanische Betätigungszüge: Grundlagen und Anwendungen, Ludwig M. Leiseder, Verlag Moderne Industrie, 1994, bekannt.

Diese bisher bekannten Betätigungszüge brauchen zu ihrer Montage einen gewissen Zeitaufwand sowie eine bestimmte Fertigkeit des Bedienpersonals, um den Seilzug in den oft nur schwer zugänglichen Anlenkpunkten zu befestigen.

Eine gattungsgemäße Anlenkung mit Blindmontage ist aus der EP 0 536 826 A bekannt.

Aufgabe der Erfindung ist es, eine möglichst einfache Montage, insbesonders eine Blindmontage von mechanischen Betätigungszügen bzw. ihrer Anschlußelemente an der zugeordneten Geber- oder Nehmerseite zu ermöglichen und einen sicheren Halt bzw. Sitz zu gewährleisten.

Diese Aufgabe wird erfindungsgemäß gelöst von einer Anlenkung mit den Merkmalen des Anspruchs 1 bzw. des Anspruchs 2. Eine Ausführung der Erfindung ist Gegenstand von Unteranspruch 3.

In dem Nehmer- oder Geberelement ist ein zur eigentlichen Aufnahme für das Anschlußelement reichende, sich verjüngende Einführung vorgesehen, die eine schnelle Montage, ja sogar eine Blindmontage des Anschlußelements in dem Nehmer- oder Geberelement ermöglicht. Da das Anschlußelement erfindungsgemäß dann formschlüssig in seiner eigentlichen Aufnahme gelagert ist, sind weitere Sicherungsmaßnahmen, wie Festschrauben oder ähnliche weitere Handgriffe, nicht notwendig. Dadurch ist die Montage wesentlich vereinfacht. Auch an die Qualifikation des Bedienpersonals sind keine hohen Anforderungen zu stellen, da Falschmontagen praktisch ausgeschlossen werden können. Der Werker muß lediglich das Anschlußelement, bspw. den Kugelnippel, in die einzig vorhandene größere Öffnung einschieben, bis das Anschlußelement im Nehmer- oder Geberelement eingerastet ist. Ein einfaches Ziehen am Seilzug genügt, um festzustellen, ob die Montage perfekt ist. Bekannte Möglichkeiten für Fehlmontagen, wie ein unzureichendes Anschrauben oder ein fehlerhaftes Festlegen irgendwelcher Klemmelemente, sind vermieden .

Oder erfindungsgemäße Formschluß wird nach Anspruch 1 dadurch erreicht, daß entweder eine Wand der Einführung elastisch verformbar ist oder daß ein Halteelement vorgesehen ist, das mit dem Anschlußelement in der Aufnahme elastisch zusammenwirkt, so daß das Anschlußelement in der Aufnahme einschnappen oder einklipsen kann. Die Eigensteifigkeit des Materials sorgt sowohl für einen leichten Zugang des Anschlußelements zur Aufnahme als auch für einen sicheren Halt des Anschlußelements in dem Nehmer- oder Geberelement.

In einer Ausführungsform des Anspruchs 1 ist mindestens eine elastisch federnde Wand vorgesehen, die beim Einschieben des Anschlußelements in die Einführung nachgibt und anschließend, wenn das Anschlußelement in der Aufnahme ruht, zurückfedert. Diese Ausführung ist relativ billig herstellbar und gewährleistet trotzdem einen absolut sicheren Sitz des Seilzugs im Mitnehmer. Die heute üblichen Kunststoffe für die Nehmer- oder Geberelemente sind ausreichend reproduzierbar herstellbar, um eine sichere Haltefunktion zu gewährleisten.

In einer Ausführungsform Anspruch 1 ist ein federndes Sicherungselement vorgesehen, daß das Anschlußelement in der Aufnahme umgreift oder festhält. Dieses Element kann bevorzugt aus Metall oder Federstahl sein und ist in der einfachsten Form ein gebogenes Stück Federdraht, welches mit dem Anschlußelement und der Führung geeignet zusammenwirkt.

Als zusätzliche Sicherung kann vorgesehen sein, daß nach dem Einführen des Anschlußelements in die Aufnahme eine Wand des Nehmer- oder Geberelements mit dem Rest des Gehäuses verklipst wird, so daß ein Herausrutschen des Anschlußelements sicher verhindert wird.

In der erfindungsgemäßen Ausführungsform des Anspruchs 2 ist eine gebogene Einführbahn vorgesehen, wobei das Anschlußelement über einen Totpunkt geschoben wird, der hinter der Aufnahme liegt und dann wieder nach vorne in die Aufnahme einschnappt. Durch den normalerweise vorhandenen Zug am Seil ist ein sicherer Halt des Anschlußelements in dem Nehmer- oder Geberelement gewährleistet.

Weitere Ziele, Vorteile, Merkmale und Anwendungsmöglichkeiten der vorliegenden Erfindung ergeben sich aus der nachfolgenden Beschreibung zweier Ausführungsbeispiele anhand der Zeichnung.

Es zeigen:
- Figuren 1a, b, c: eine Ausführung einer erfindungsgemäßen Anlenkung
- Figuren 2a, b, c: eine weitere Ausführung einer erfindungsgemäßen Anlenkung
- Figur 3: eine Übersetzung für ein Handbremssystem, bei der die erfindungsgemäße Anlenkung Anwendung findet,
- Figuren 4a, b und Figuren 5a, b: eine weitere Ausführung einer erfindungsgemäßen Anlenkung, wie sie in Figur 3 einsetzbar ist.

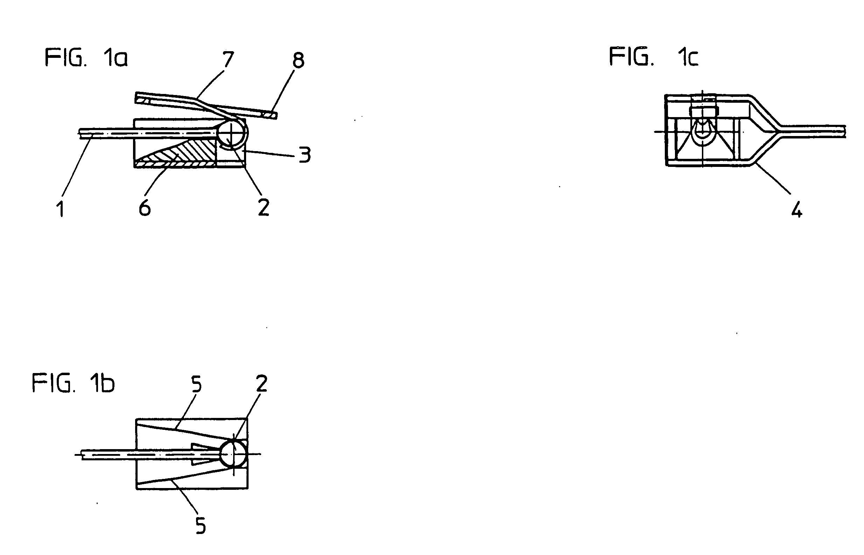

Gemäß Figuren 1a bis 1c weist ein Bremszug, insbesondere ein Innenzug, einen Seilzug 1 mit einem Kugelnippel 2 als Anschlußelement auf. Mit diesem Kugelnippel 2 wird der Bremszug bzw. Seilzug 1 in der Aufnahme 3 eines Geber- oder Nehmerelements 4, bspw. einer Handbremsanlage eines Kraftfahrzeugs, aufgenommen. Das Geber- oder Nehmerelement 4 weist erfindungsgemäß eine Einführung 5 auf, die hier mit einer Rampe 6 versehen ist, so daß ein zur Aufnahme 3 hinführender, sich verjüngender Kanal gebildet ist. Die Schräge oder Einführrampe 6 kann durch ein separat hergestelltes und in das Gehäuse der Aufnahme eingesetztes Bauteil realisiert sein. Ebenso ist es möglich, daß es mit der gesamten Aufnahme z.B. als Blechteil oder als Kunststoffspritzteil gefertigt ist. Bei der Montage wird der Seilzug 1 mit seinem Kugelnippel 2 von links kommend eingeführt, rutscht über die Einführung 5 in die richtige Position zur Aufnahme 3, wobei der Kugelnippel 2 auf der Einführschräge 6 bei der in der Figur 1a angenommenen Einbauweise nach oben gleitet. Dabei drückt der Kugelnippel 2 ein federelastisches Sicherungselement 7, das an einem bzgl. des Fahrzeugs ortsfesten Gehäuseteil 8, insbesondere einer Gehäusedurchbrechung, gehaltert ist, in Entriegelungsstellung nach oben, so daß der Kugelnippel 2 auf der Einführschräge 6 in eine Endstellung verschiebbar ist, wobei das eine Ende des federelastischen Sicherungselements 7 den Kugelnippel 2 umgreift und infolge der Federwirkung in eine Sicherungsstellung in die Aufnahme 3 des Geber- bzw. Nehmerelements 4 bei der in Figur 1a dargestellten Ausführungsform nach unten drückt. Der Kugelnippel 2 gleitet also über die auf der Rampe bzw. der Einführschräge 6 zunächst nach oben und wird dann durch das federelastische Sicherungselement 7 nach unten in die Aufnahme 3 gedrückt und dort gehalten.

In dieser Sicherungsstellung ist der Seilzug 1 mit dem Kugelnippel 2 im Geber- oder Nehmerelement 4 fixiert, so daß insgesamt eine Blindmontage des Seilzugs 1 erreicht worden ist. Durch die schräge Einführung und das formschlüssige Einrasten ist kein besonderer Aufwand zur Überwachung der Montage notwendig. Das Sicherungselement 7 ist bei dem hier gewählten Ausführungsbeispiel als Blattfeder ausgebildet, die am Ende eine Krümmung aufweist, welche den Kugelnippel 2 umgreift, hält und den Einschubweg begrenzt.

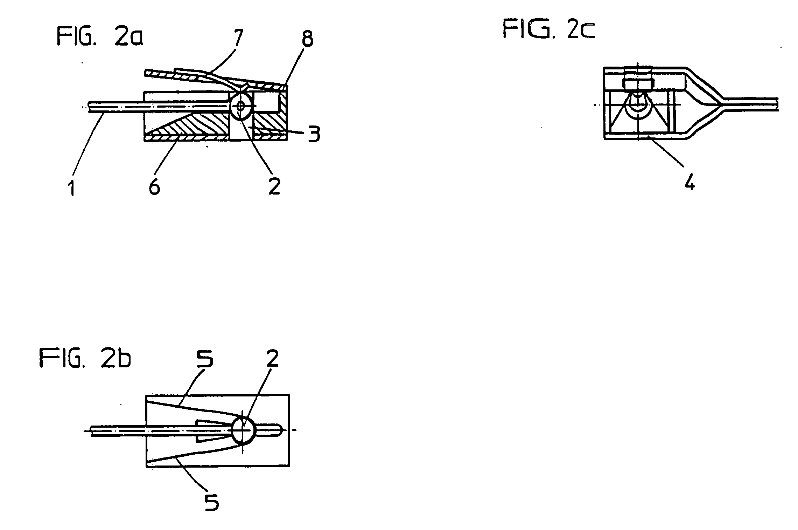

Die Ausführungsform gemäß der Figuren 2a bis 2c unterscheidet sich gegenüber derjenigen gemäß Figur 1 dadurch, daß der Kugelnippel 2 des Seilzugs 1 in der Aufnahme 3 aufgenommen ist, also an einer Vor- oder Rückwärtsbewegung gehindert ist, und durch das Ende des federelastischen Elements 7 bzw. das abgewinkelte Schenkelende in der Aufnahme 3 fixiert ist. Demgegenüber ist bei der Ausführungsform gemäß der Figuren 1a bis 1c die Endstellung bzw. Sicherungsstellung des Kugelnippels durch das den Kugelnippel 2 umgreifende Ende des Federelements realisiert.

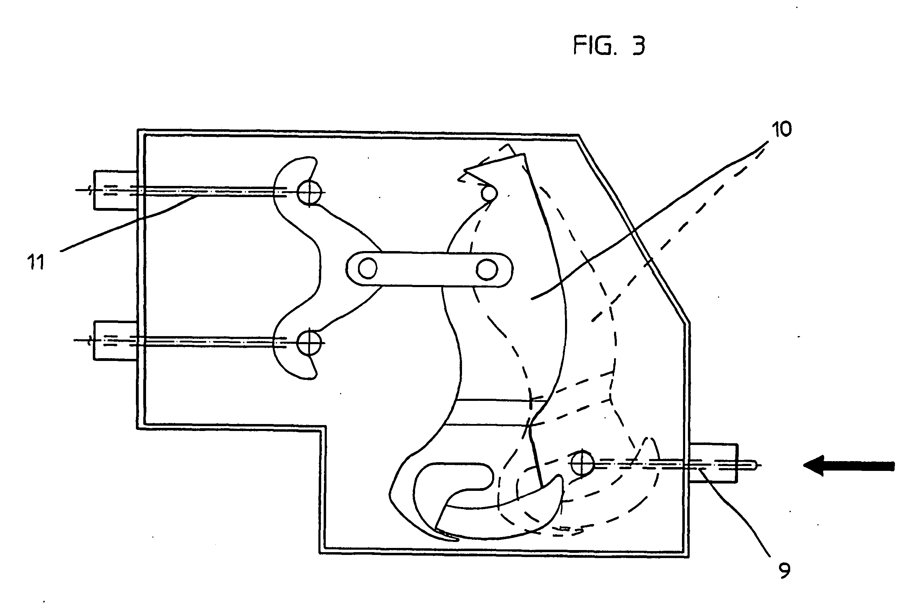

Figur 3 zeigt eine weitere Ausführungsform einer erfindungsgemäßen Anlenkung anhand einer Draufsicht auf eine Übersetzungsanordnung für ein Handbremssystem, wobei mit Bezugszeichen 9 der vom Handbremshebel oder einer Fußbetätigung abführende Bremsseilzug bezeichnet ist, welcher an einem in dem Übersetzungsteil gelagerten Schwenkhebel 10 angelenkt ist und über nicht näher bezeichnete Übersetzungselemente auf einen zu den Bremstrommeln abführenden Bremszug 11 einwirkt. Aus Figur 3 ist zu entnehmen, daß für die Anlenkung des Bremsseilzugs 9 an dem Schwenkteil 10 hier nur ein beschränkt zugreifbarer Raum zur Verfügung steht, so daß die Montage sich schwierig oder zeitaufwendig gestaltet.

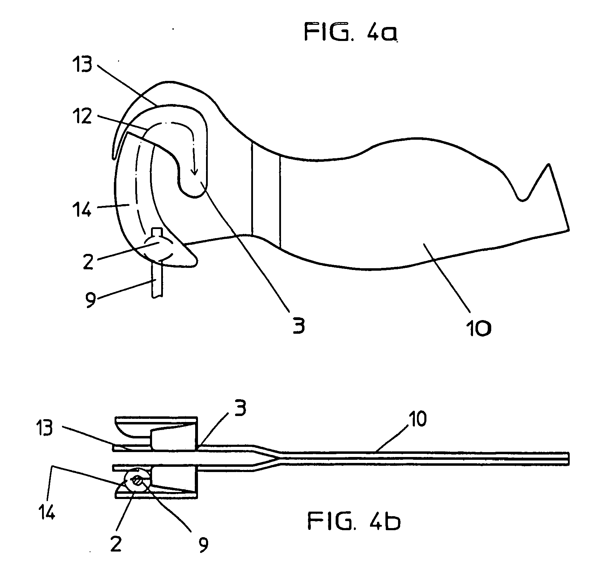

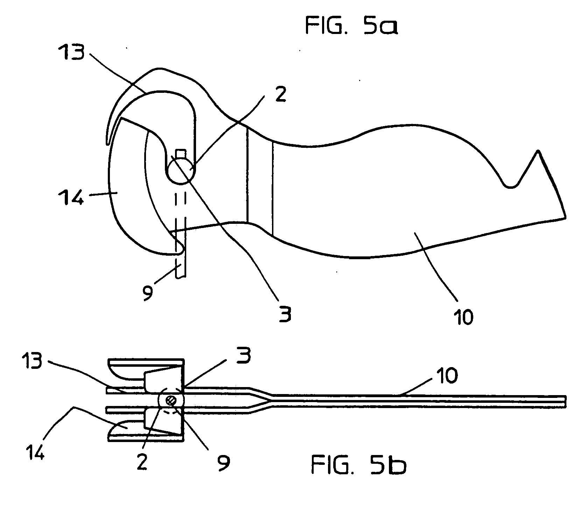

Erfindungsgemäß wird die Montage wesentlich vereinfacht, wenn ein erfindungsgemäßer Schwenkhebel 10 verwendet wird, wie er in den Figuren 4 oder 5 näher gezeigt ist. Der Schwenkhebel 10 weist an seinem mit dem Betätigungszug 9 zu verbindenden Ende eine Rampe 14 auf, auf welcher der Kugelnippel 2 bei der Montage bzw. bei dem Einschieben entsprechend der Pfeilrichtung 12 entlang gleitet und nach Durchlaufen einer Umlenkführung 13 in Endstellung in die Aufnahme 3 gemäß Figur 5 gehalten ist.

Figuren 4a und b zeigen den Anfang der Montage, wobei sich der Seilnippel 2 am Anfang der Rampe 14 befindet und dann entlang des Pfeiles 12 über die Umlenkführung 13 geführt wird. D.h. der Seilnippel 2 wird weiter nach hinten geführt als es seiner Ruhelage in der Aufnahme 3 entspricht.

Diese fertig montierte Stellung ist in den Figuren 5a und b gezeigt. Der Kugelnippel 2 ruht in der Aufnahme 3. Die Sicherung des Seilzuges 9 in dieser Endstellung erfolgt durch die dem Zug 9 immanente Eigenfederwirkung. Auch mit dieser Ausführung der Erfindung ist eine Blindmontage des mechanischen Betätigungszuges, hier des Bremszuges 11 an einem Nehmer- oder Geberelement oder auch einem Übersetzungsteil, etwa einem Schwenkhebel 10, erreicht worden.

### Bezugszeichenliste:

- 1: Seilzug
- 2: Kugelnippel
- 3: Aufnahme
- 4: Geber- oder Nehmerelement
- 5: Einführung
- 6: Rampe
- 7: Sicherungselement
- 8: Gehäuseteil
- 9: Seilzug
- 10: Schwenkhebel
- 11: Bremszug
- 12: Pfeilrichtung
- 13: Umlenkführung
- 14: Rampe

## Patentansprüche

1. Anlenkung eines mechanischen Betätigungszuges, bspw. eines Bremszuges, mit einem Anschlußelement, wie einem Kugelnippel (2) oder dgl., an einem Nehmer- oder Geberelement (4), wobei das Nehmer- oder Geberelement (4) eine zur eigentlichen Aufnahme (3) für das Anschlußelement (2) reichende, sich verjüngende Einführung (5) aufweist, wobei das Anschlußelement (2) in der Aufnahme (3) formschlüssig gelagert ist, wobei eine Rampe (6) vorgesehen ist, so dass ein zur Aufnahme (3) hinführender, entgegen der Zugrichtung des Betätigungszuges sich verjüngender Kanal gebildet ist, der eine Blindmontage durch Einschieben des Anschlußelements (2) entgegen der Zugrichtung ermöglicht, **dadurch gekennzeichnet, dass** mindestens eine Wand der Einführung (5) elastisch verformbar ausgebildet ist oder ein elastisch verformbares Halteelement an der Aufnahme vorgesehen ist, die bzw. das beim Einschieben des Anschlußelementes (2) in die Einführung (5) nachgibt und anschließend, wenn das Anschlußelement (2) in der Aufnahme (3) ruht, zurückfedert und dabei das Anschlußelement (2) durch die Wand der Einführung (5) in der Aufnahme (3) gehalten bzw. durch das Halteelement in der Aufnahme (3) umfasst und/oder festgeklemmt ist.

2. Anlenkung eines mechanischen Betätigungszuges, bspw. eines Bremszuges, mit einem Anschlußelement, wie einem Kugelnippel (2) oder dgl., an einem Nehmer- oder Geberelement (4), wobei das Nehmer- oder Geberelement (4) eine zur eigentlichen Aufnahme (3) für das Anschlußelement (2) reichende, sich verjüngende Einführung (5) aufweist, wobei das Anschlußelement (2) in der Aufnahme (3) formschlüssig gelagert ist, wobei eine Rampe (14) vorgesehen ist, so dass ein zur Aufnahme (3) hinführender, entgegen der Zugrichtung des Betätigungszuges sich verjüngender Kanal gebildet ist, der eine Blindmontage durch Einschieben des Anschlußelements (2) entgegen der Zugrichtung ermöglicht, **dadurch gekennzeichnet, dass** eine gebogene Einführung (13) vorgesehen ist, welcher derart ausgebildet ist, dass das Anschlußelement (2) durch die Einführung (13) über einen hinter der Aufnahme (3) liegenden Totpunkt geschoben wird und dann in die Aufnahme (3) einschnappt.

3. Anlenkung nach Anspruch 1, **gekennzeichnet durch** mindestens eine Wand (8), die nach dem Einführen des Anschlußelements (2) in die Aufnahme (3) mit dem Gehäuse verklipsbar ist.

## Claims

1. Articulation of a mechanical actuating pull, for example a brake pull, with a connecting element, such as a ball nipple (2) or the like at a receiver or transmitter element (4), wherein the receiver or transmitter element (4) has a tapering entrance (5) serving for the actual receptacle (3) for the connecting element (2), wherein the connecting element (2) is mechanically positively mounted in the receptacle (3), wherein a ramp (6) is provided so that a channel, which leads to the receptacle (3) and tapers against the tension direction of the actuating pull and which enables blind assembly by pushing-in of the connecting element (2) against the tension direction, is formed, **characterised in that** at least one wall of the entrance (5) is formed to be resiliently deformable or a resiliently deformable holding element is provided at the receptacle, which wall or element on pushing of the connecting element (2) into the entrance (5) yields and subsequently springs back when the connecting element (2) rests in the receptacle (3) and **in that** case the connecting element (2) is held in the receptacle by the wall of the entrance (5) or is embraced and/or firmly clamped by the holding element in the receptacle (3).

2. Articulation of a mechanical actuating pull, for example a brake pull, with a connecting element, such as a ball nipple (2) or the like at a receiver or transmitter element (4), wherein the receiver or transmitter element (4) has a tapering entrance (5) serving for the actual receptacle (3) for the connecting element (2), wherein the connecting element (2) is mechanically positively mounted in the receptacle (3), wherein a ramp (17) is provided so that a channel, which leads to the receptacle (3) and tapers against the tension direction of the actuating pull and which enables blind assembly by pushing-in of the connecting element (2) against the tension direction, is formed, **characterised in that** a bent entrance (13) is provided which is constructed in such a manner that the connecting element (2) is pushed through the entrance (13) beyond a dead point lying behind the receptacle (3) and then snaps into the receptacle (3).

3. Articulation according to claim 1, **characterised by** at least one wall (8) which after introduction of the connecting element (2) into the receptacle (3) can be clipped to the housing.

## Revendications

1. Ancrage d'un câble d'une commande mécanique flexible, par exemple d'un câble de frein, comprenant un élément de raccordement, tel qu'un embout sphérique (2) ou similaire, sur un élément récepteur ou transmetteur (4), dans lequel l'élément récepteur ou transmetteur (4) présente une entrée (5) se rétrécissant, allant jusqu'au logement effectif (3) pour l'élément de raccordement (2), dans lequel l'élément de raccordement (2) est disposé par conjugaison de formes dans le logement (3), dans lequel une rampe (6) est prévue de telle sorte qu'on forme ainsi un canal menant jusqu'au logement (3), se rétrécissant dans le sens inverse du sens de traction du câble de commande flexible, qui permet un montage en aveugle en poussant l'élément de raccordement (2) dans le sens inverse du sens de traction, **caractérisé en ce qu'**au moins une paroi de l'entrée (5) est réalisée de manière à pouvoir être déformée élastiquement ou bien il est prévu, sur le logement, un élément de maintien déformable élastiquement, qui se relâche lors de l'insertion de l'élément de raccordement (2) dans l'entrée (5) puis, lorsque l'élément de raccordement (2) repose dans le logement (3), se détend, et ainsi, l'élément de raccordement (2) est maintenu par la paroi de l'entrée (5) dans le logement (3) ou est enserré et/ou bloqué par l'élément de maintien dans le logement (3).

2. Ancrage d'un câble d'une commande mécanique flexible, par exemple d'un câble de frein, comprenant un élément de raccordement, tel qu'un embout sphérique (2) ou similaire, sur un élément récepteur ou transmetteur (4), dans lequel l'élément récepteur ou transmetteur (4) présente une entrée (5) se rétrécissant, allant jusqu'au logement effectif (3) pour l'élément de raccordement (2), dans lequel l'élément de raccordement (2) est disposé par conjugaison de formes dans le logement (3), dans lequel une rampe (14) est prévue, de telle sorte qu'on forme ainsi un canal menant jusqu'au logement (3), se rétrécissant dans le sens inverse du sens de traction du câble de commande flexible, qui permet un montage en aveugle en insérant l'élément de raccordement (2) dans le sens inverse du sens de traction, **caractérisé en ce qu'**une entrée courbée (13) est prévue, qui est réalisée de telle sorte que l'élément de raccordement (2) est poussé au travers de l'entrée (13) au-dessus d'un point mort se trouvant derrière le logement (3), puis s'encliquette dans le logement (3).

3. Ancrage selon la revendication 1, **caractérisé par** au moins une paroi (8), qui peut être encliquetée au boîtier après l'introduction de l'élément de raccordement (2) dans le logement (3).
